# EUROPEAN PATENT APPLICATION

(11) **EP 2 398 135 A2**
(43) Date of publication of application: **21.12.2011**
(21) Application number: 11166753.1
(22) Date of filing: 19.05.2011
(51) Int. Cl.: H02M 3/335

(54) **DC/DC power converter having active self driving synchronous rectification**

(30) Priority: 24.05.2010 US 347624 P; 12.01.2011 US 5188
(71) Applicant: Intersil Americas Inc., Milpitas, CA 95035 (US)
(72) Inventor: Zhan, Xiaodong, Plano, TX 75025 (US); Qiu, Weihong, San Jose, CA 95131 (US); Greenfield, Fred, Nederland, CO 80466 (US); Liang, Zhixiang, San Ramon, CA 94582 (US)
(74) Representative: Fleuchaus, Michael A.

(57) **Abstract**

A DC/DC voltage converter includes a transformer having a primary side and a secondary side. Primary side circuitry is connected to the primary side and includes a first pair of switching transistors controlled responsive to first control signals from the primary side of the transformer and receiving an input voltage. Secondary side circuitry is connected to the secondary side and includes a second pair of switching transistors controlled responsive to second control signals from the secondary side of the transformer and providing an output voltage. Driver circuitry generates the second control signals responsive to drain and source voltages at each of the second pair of switching transistors and a first and second PWM control signals. Signal shaping circuitry provides the first and second PWM control signals responsive to a drain voltage of each of the second pair of switching transistors.

## Description

### CROSS-REFERENCE TO RELATED APPLICATIONS

This application claims priority to U.S. Provisional Application No. 61/347,624, filed 24 May, 2010, entitled DC/DC POWER CONVERTER HAVING ACTIVE SELF DRIVING SYNCHRONOUS RECTIFICATION, the entirety of which is incorporated herein by reference.

### TECHNICAL FIELD

The present invention relates to DC/DC converters, and more particularly, to DC/DC having passive self driving rectification.

### BACKGROUND

DC/DC power converter units utilize a transformer having a primary side that receives an input voltage V_{IN}. The primary side voltage V_{IN} is coupled to a secondary side through the transformer. The secondary side circuitry provides an output voltageV_{OUT}. The primary side circuitry and the secondary side circuitry contain switching transistors that require PWM control signals to operate the DC/DC converter in various modes of operation. There is a need to provide voltage isolation between the primary side circuitry and the secondary side circuitry. Thus, the PWM signals provided to the secondary side circuitry switching transistors must be either voltage isolated from the primary side or provided from the secondary side in a self driving fashion. Thus, there is a need within high power density, high performance isolated DC/DC power converter units to drive the secondary side power transistors in an efficient manner. This must be done in a manner that reduces the part counts within the secondary side in order to make the best use of the chip area within the DC/DC converter IC applications.

### SUMMARY

The present invention, as disclosed and described herein, in one aspect thereof, comprises a DC/DC voltage converter, including a transformer having a primary side and a secondary side. Primary side circuitry connected to the primary side includes a first pair or switching transistors that are controlled responsive to first control signals from the primary side of the transformer and an input voltage. Secondary side circuitry is connected to the secondary side and includes a second pair of switching transistors controlled responsive to second control signals from the secondary side of the transformer and provides an output voltage. The driver circuitry generates the second control signals responsive to drain/source voltages at each of the second pair of switching transistors and second PWM control signals. Signal shaping circuitry provides the first and second PWM control signals responsive to a drain voltage of each of the second pair of switching transistors.

### BRIEF DESCRIPTION OF THE DRAWINGS

For a more complete understanding, reference is now made to the following description taken in conjunction with the accompanying Drawings in which:

Fig. 1 is a schematic diagram of a prior art DC/DC converter having passive self driving rectification;

Fig. 2 illustrates an additional prior art embodiment of a DC/DC converter having passive self driving rectification;

Fig. 3 illustrates a further prior art embodiment of a DC/DC converter using active PWM driving on the secondary side;

Fig. 4 illustrates a technique using ideal diode active self driving rectification on the secondary side;

Fig. 5 illustrates a schematic block diagram of a DC/DC converter using active self driving synchronous rectification;

Fig. 6 illustrates a DC/DC converter using active self driving rectification in a half bridge converter;

Fig. 7 illustrates an active clamp forward DC/DC converter using active self driving rectification;

Fig. 8 illustrates one embodiment of the signal shaping circuits of Figs. 6 and 7; and

Fig. 9 illustrates a further embodiment of the signal shaping circuits of Figs. 6 and 7.

### DETAILED DESCRIPTION

Referring now to the drawings, wherein like reference numbers are used herein to designate like elements throughout, the various views and embodiments of a DC/DC power converter having active self driving synchronous rectification are illustrated and described, and other possible embodiments are described. The figures are not necessarily drawn to scale, and in some instances the drawings have been exaggerated and/or simplified in places for illustrative purposes only. One of ordinary skill in the art will appreciate the many possible applications and variations based on the following examples of possible embodiments.

DC/DC power converter units may be provided utilizing a transformer configuration wherein primary side circuitry receives an input voltage V_{IN}. The primary side voltage V_{IN} is coupled to secondary side circuitry through a transformer. The secondary side circuitry provides an output voltageV_{OUT}. The primary side circuitry and secondary side circuitry contain switching transistors that require PWM control signals to operate the DC/DC converter in various modes of operation. There is a need to provide voltage isolation between the primary side circuitry and secondary side circuitry. Thus the PWM signals provided to the secondary side switching transistors must be either voltage isolated from the primary side or provided from the secondary side in a self driving fashion. Thus, there is a need within high power density high performance isolated DC/DC power converter units to drive the secondary side power transistors in an efficient manner. This must also be done in a manner that reduces the part counts within the secondary side in order to make the best use of chip area within DC/DC converter IC applications.

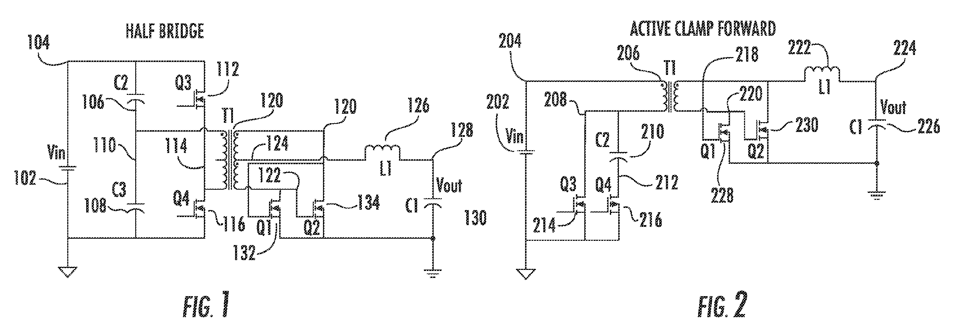

Referring now to the drawings, and more particularly to Figs. 1 and 2, there are illustrated existing techniques for providing passive self driving on a secondary side of a DC/DC converter within a half bridge circuit configuration. It is fairly easy to achieve high density solutions within a half bridge circuit configuration as illustrated in Fig. 1 or an active clamp forward DC/DC voltage converter configuration as illustrated in Fig. 2, but the performance of these types of systems is fairly low. In the example illustrated in Fig. 1, a half bridge DC/DC voltage converter is illustrated including a passive self driving configuration. The input voltage V_{IN} 102 is applied at node 104. A pair of capacitors 106 and 108 are connected between node 104 and ground. Capacitor 106 is connected between node 104 and node 110. The capacitor 108 is connected between node 110 and ground. A first switching power transistor 112 has its drain/source path connected between node 104 and node 114. A second switching power transistor 116 has its drain/source path connected between node 114 and ground. A transformer 118 has its primary side connected between node 110 and node 114. The secondary side of transformer 118 connects to the secondary side circuitry at node 120 and node 122, respectively. The secondary side of the transformer 118 additionally includes a center tapped node 124.

An inductor 126 is connected between the center tapped node 124 of the secondary side of transformer 118 and node 128. A capacitor 130 is connected between node 128 and ground. The secondary side circuitry additionally includes a pair of switching power transistors 132 and 134. Switching transistor 132 has its drain/source path connected between node 122 and ground. The gate of switching transistor 132 is connected to receive a drive signal from node 120. Switching transistor 134 has its drain/source path connected between node 120 and ground. The gate of transistor 134 is connected to receive a drive signal from node 122. In the passive self driving configuration illustrated in Fig. 1, the gate of transistor 132 is connected to the drain of transistor 134. Similarly, the gate of transistor 134 is connected to the drain of transistor 132.

Fig. 2 illustrates an active clamp forward DC/DC voltage converter configuration. The input voltage 202 is connected between node 204 and ground. A transformer 206 has its primary side connected between node 204 and node 208. A capacitor 210 is connected between node 208 and node 212. The primary side switching power transistors consist of transistor 214 and transistor 216. Transistor 214 has its drain/source path connected between node 208 and ground. Transistor 216 has its drain/source path connected between node 212 and ground. The secondary side of transformer 206 is connected on the secondary side between node 218 and node 220. An inductor 222 is connected between node 218 and the output voltage node 224. The output voltage nodeV_{OUT} is provided from node 224. A capacitor 226 is connected between node 224 and ground.

The secondary side includes a pair of transistors 228 and 230. Transistor 228 has its drain/source path connected between node 220 and ground. The gate of transistor 228 is connected to node 218. Transistor 230 has its drain/source path connected between node 218 and ground and its gate connected to node 220. In the configuration of Fig. 2, the gate of transistor 228 is connected to and driven by the drain of transistor 230. The gate of transistor 230 is connected to and driven by the drain of transistor 228.

Each of the solutions of Figs. 1 and 2 provide a relatively high density approach but have very low efficiencies. The gate voltage at each of the transistors on the secondary side varies with the input voltage and the output voltage. These types of systems are very difficult to use for implementing fast switching systems and there are difficulties in optimizing the dead time between the switching times of the transistors on the secondary side. Additionally, there is no capability of providing diode emulation for a pre-bias start up and high light load efficiencies within the driver configurations of Figs. 1 and 2.

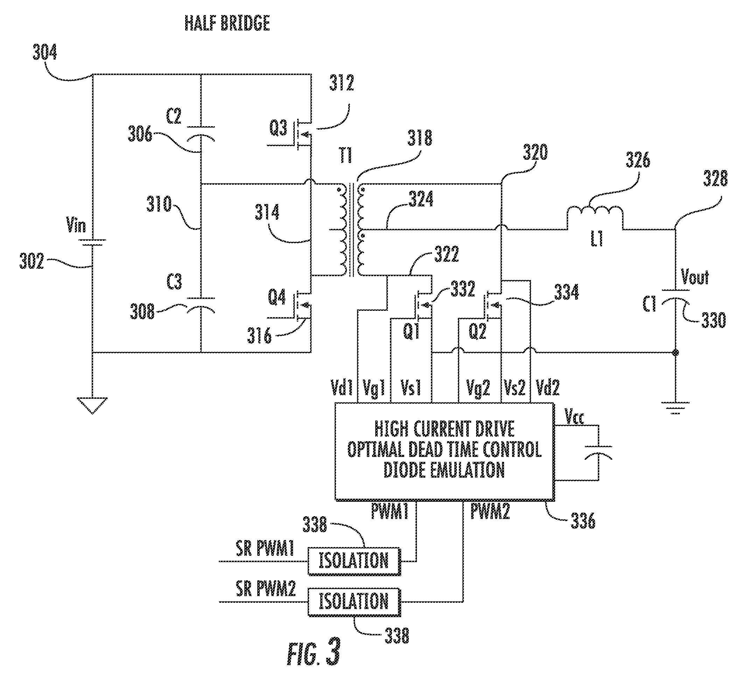

Referring now to Fig. 3, there is illustrated an active PWM driving configuration that may be used to overcome the low performance issues illustrated with respect to Figs. 1 and 2. The active PWM driving configuration of Fig. 3 has the input voltage 302 applied at node 304. A pair of capacitors 306 and 308 are connected between node 304 and ground. Capacitor 306 is connected between node 304 and node 310. Capacitor 308 is connected between node 310 and ground. The primary side switching power transistor 312 has its drain/source path connected between node 304 and node 314. Switching power transistor 316 has its drain/source path connected between node 314 and ground. The primary side circuitry is connected to the primary side terminals of the transformer 318 at node 310 and node 314.

The secondary side of the transformer 318 is connected to the secondary side circuitry at node 320 and node 322. The secondary side also includes a center tapped node 324. An inductor 326 is connected between node 324 and node 328. Capacitor 330 is connected between the output voltage node 328 and ground. The secondary side additionally includes a switching power transistor 332 and switching power transistor 334. Power transistor 332 has its drain/source path connected between node 322 and ground. Transistor 334 has its drain/source path connected between node 320 and ground. The gates of transistors 332 and 334 additionally receive control signals from drive circuitry 336 that provides high current drive, optimal dead time control and diode emulation. The drive circuitry 336 generate the driver control signals to the gates of transistors 332 and 334 responsive to PWM control signals received from the primary side as signals SRPWM1 and SRPWM2. Since these signals are provided from the primary side to the secondary side across the transformer boundary, voltage isolation circuitries 338 are required. This configuration has high performance characteristics but it is difficult to achieve a high density implementation. The use of the voltage isolation circuitries 338 limit the density of the circuit and increase the cost associated therewith.

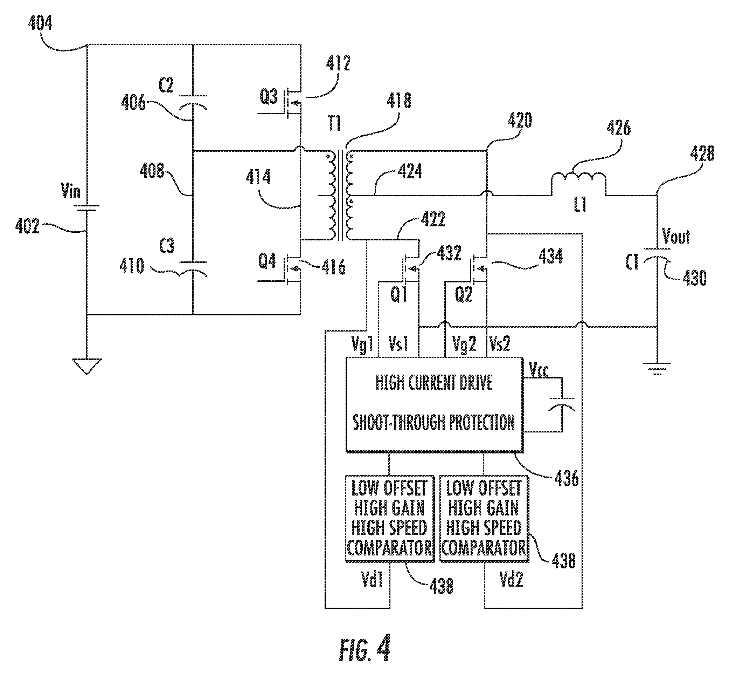

Referring now to Fig. 4, there is illustrated yet another prior art embodiment of a DC/DC converter that uses ideal diode active self driving rectification on the secondary side. The input voltage V_{IN} 402 is applied at node 404. A capacitor 406 is connected between node 404 and node 408. Capacitor 410 is connected between node 408 and ground. A first switching power transistor 412 has its drain/source path connected between node 404 and node 414. Transistor 416 has its drain/source path connected between node 414 and ground. The primary side circuitry connects with a primary side of transformer 418 at node 408 and node 414.

The secondary side of transformer 418 is connected with the secondary side circuitry at node 420 and node 422. The secondary side of transformer 418 additionally includes a center tapped node 424. An inductor 426 is connected between center tapper node 424 and node 428. Node 428 comprises the output voltage node for providing the voltage V_{OUT}. A capacitor 430 is connected between node 428 and ground. The secondary side includes a pair of switching power transistors 432 and 434. The drain/source path of transistor 432 is connected between node 422 and ground. The drain/source path of transistor 434 is connected between node 420 and ground. The gates of transistors 432 and 434 are connected to drive circuitry 436 that provides high current drive and shoot through protection through the gates of transistors 432 and 434. A pair of low offset, high gain, high speed comparators 438 provide driver control signals to the drive circuit 436 while monitoring the drain voltage of transistors 432 and 434 at nodes 422 and 420, respectively. This implementation provides an ideal diode active self driving technique that provides a high performance, high density solution with automatic diode emulation and optimal dead time control. However, this solution is not easy to implement and is difficult to achieve a fast turn off due to the long propagation delays caused by the comparators 438.

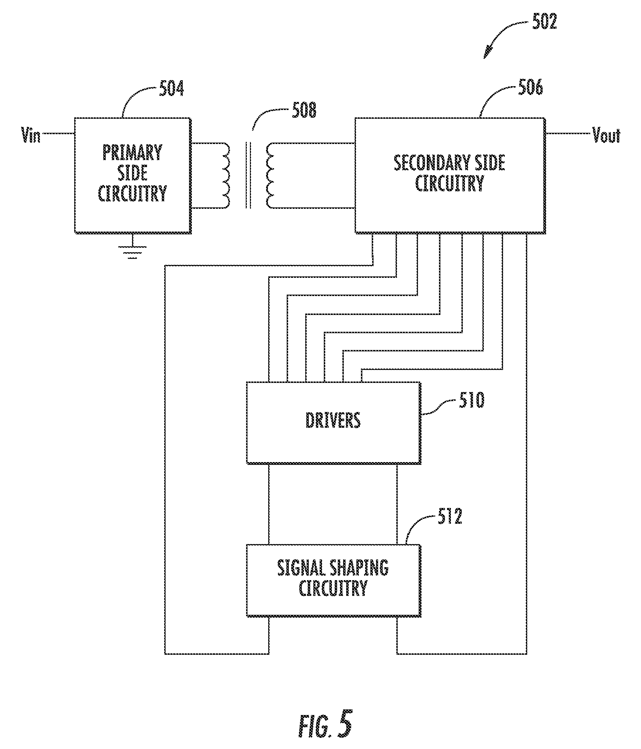

Referring now to Fig. 5, there is illustrated a DC/DC voltage converter 502 that has active self driving synchronous rectification. The DC/DC converter 502 consists of primary side circuitry 504 and secondary side circuitry 506 that are coupled together via a transformer 508. The input voltage V_{IN} is provided to the primary side circuitry 504 and is coupled to the secondary side circuitry 506 via the transformer 508. The secondary side circuitry 506 provides the output voltage V_{OUT}. Drivers 510 monitor various signals from the secondary side circuitry 506 and provide drive control signals to switching power transistors within the secondary side circuitry 506. The drivers 510 receive drive control signals from signal shaping circuitry 512. The signal shaping circuitry 512 provides the control signals to the drivers 510 responsive to voltages monitored from various nodes within the secondary side circuitry 506..

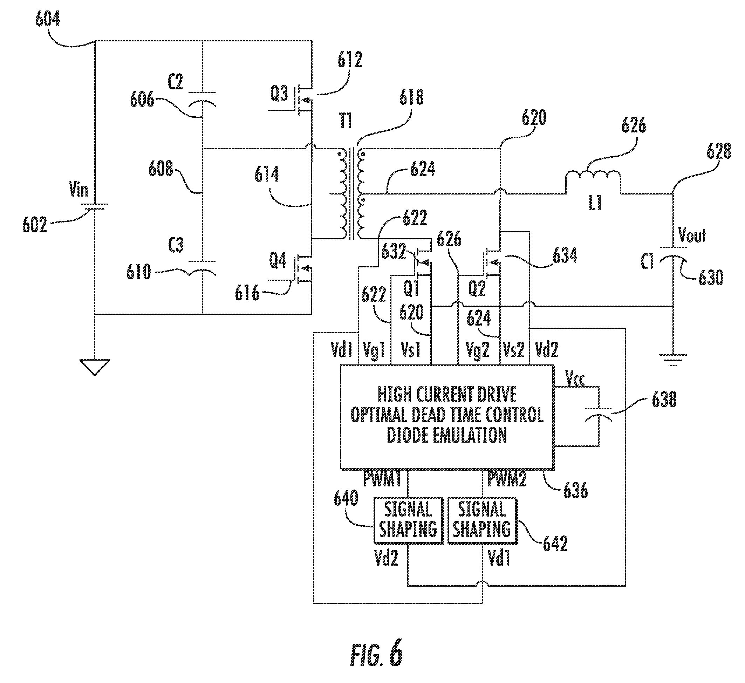

Referring now to Fig. 6, there is provided an illustration of a DC/DC voltage converter having active self driving rectification within a half bridge converter circuit. This configuration provides a high performance, high density configuration that is easy to implement. The device operates well with a 50% duty cycle bus converter. Additionally, diode freewheeling is provided when the duty cycle is less than 50%. The input voltage V_{IN} 602 is provided at a node 604. A first capacitor 606 is connected between node 604 and node 608. A second capacitor 610 is connected between node 608 and ground. A first switching power transistor 612 has its drain/source path connected between node 604 and node 614. A second switching power transistor 616 has its drain/source path connected between node 614 and ground. The transformer 618 has its primary side connected to the primary side circuitry at node 608 and node 614.

The secondary side of transformer 618 is connected to the secondary side circuitry at node 620 and node 622. The secondary side additionally includes a center tapped node 624. An inductor 626 is connected between the center tapped node 624 and node 628. Node 628 comprises the output voltage node providing the output voltage V_{OUT}. Capacitor 630 is connected between node 628 and ground. A first switching power transistor 632 has its drain/source path connected between node 622 and ground. A second switching power transistor 634 has its drain/source path connected between node 620 and ground. The gates of each of transistor 632 and transistor 634 are connected to receive drive signals from driver circuitry 636. The driver circuitry 636 provides a high current drive, optimal dead time control and diode emulation capabilities during prebias startup.

The driver circuitry 636 is also connected to monitor the drain voltage and source voltage of each of transistors 632 and 634. The drivers 636 include a capacitor 638. The drivers 636 receive a first PWM signal (PWM1) and a second PWM signal (PWM2) from signal shaping circuits 640 and 642, respectively. Signal shaping circuit 640 monitors the voltage at the drain of transistor 634 at node 620. The signal shaping circuit 642 monitors the drain voltage at the drain of transistor 632 at node 622, respectively, and generates shaped signals responsive thereto.

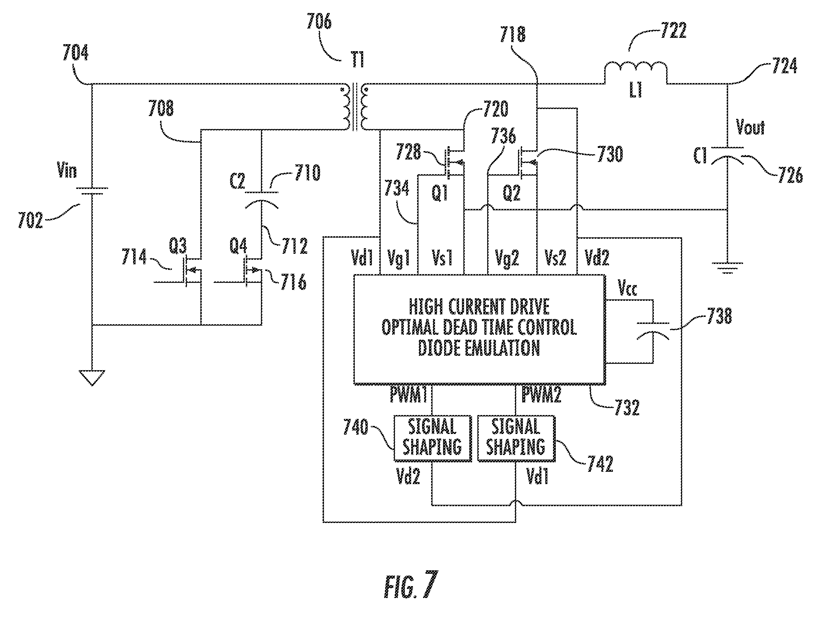

Referring now to Fig. 7, in a related embodiment, the DC/DC converter includes active self driving rectification in an active clamp forward converter. In the active clamp forward converter configuration, the input voltage 702 is applied at node 704 to an input of the primary side of transformer 706. The other input to the primary side of transformer 706 is at node 708. A capacitor 710 is connected between node 708 and node 712. A first switching transistor power 714 has its drain/source path connected between node 708 and ground. A second switching power transistor 716 has its drain/source path connected between node 712 and ground.

The secondary side of the transformer 706 is connected to the secondary side circuitry at node 718 and node 720. An inductor 722 is connected between node 718 and node 724. Node 724 comprises the output voltage node for providing the output voltage V_{OUT}. Capacitor 726 is connected between node 724 and ground. A first switching power transistor 728 on the secondary side has its drain/source path connected between node 720 and ground. A second switching power transistor 730 has its drain/source path connected between node 718 and ground. The gates of each of transistors 728 and 730 are connected to receive drive control signals from drive control circuitry 732. The driver circuitry 732 provides a high current drive, optimal dead time control and diode emulation capabilities during prebias startup. The drive circuitry provides drive control signals to the gates of transistors 728 and 730 via control lines 734 and 736, respectively. The driver circuitry 732 monitors each of the drain voltage and the source voltage for each of transistors 728 and 730. The driver circuitry 732 also includes a capacitor 738. The driver circuitry 732 also receives a PWM1 control signal and PWM2 control signal from signal shaping circuits 740 and 742, respectively. The signal shaping circuit 740 monitors the drain voltage of switching power transistor 730 at node 718. Signal shaping circuitry 742 monitors the drain voltage of switching power transistor 728 at node 720 and generates shaped signals responsive thereto.

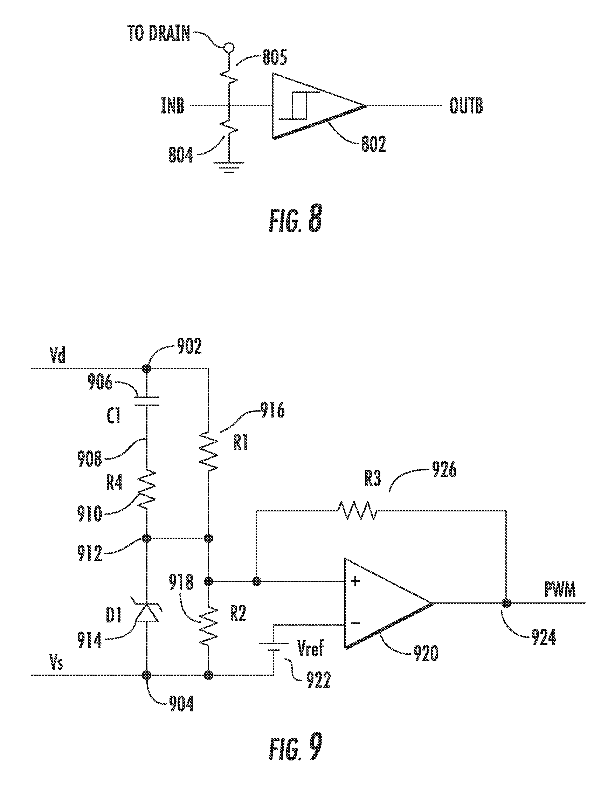

Referring now to Fig. 8, there is illustrated one embodiment of the signal shaping circuitry discussed in Figs. 6 and 7. In the embodiment of Fig. 8, the signal shaping circuitry includes a comparator 802 having an input thereto and an output. Connected between the input of the self driving comparator 802 and ground is a resistor 804. The self driving comparator receives an input signal INB which is connected to the drain voltage from one of the secondary side switching power transistors through a resistor 805. If INB is less than the turn off threshold, for example, 0.7 volts, the output OUTB goes low and stays low for a minimum of 200 nanoseconds. If the input for the self driving comparator 802 is greater than the turn on threshold, for example, 0.9 volts, the OUTB signal goes high and stays high for a minimum of 200 nanoseconds. The resistor 805 may be adjusted to match the same thresholds for different output voltages for the implementation of integrating resistor 804 and comparator 802 into a driver IC.

Referring now to Fig. 9, the signal shaping circuitry 640, 642, 740 and 742 of Figs. 6 and 7 may include a number of configurations. One such configuration is illustrated in Fig. 9. Node 902 of the circuit is connected to the drain voltage of the associated switching power transistor while node 904 is connected to the source voltage of the associated switching power transistor. Capacitor 906 is connected between node 902 and node 908. A resistor 910 is connected between node 908 and node 912. A zener diode 914 has its cathode connected to node 912 and its anode connected to node 904. A resistor 916 is connected in parallel with capacitor 906 and resistor 910 between node 902 and node 912. Resistor 918 is connected in parallel with zener diode 914 between node 912 and node 904. A comparator 920 has its non-inverting input connected to node 912 and its inverting input connected to receive a reference voltage 922 connected between the inverting input of comparator 920 and node 904. The output of comparator 920 provides the PWM signal from node 924 that is provided to the driver circuitry of the associated circuit. A feedback resistor 926 is connected between the output of the comparator at node 924 and its non-inverting input at node 912.

Using the above described circuitries of Figs. 6 through 8, there may be generated a synchronous MOSFET driver PWM signal for driving transistors Q1 and Q2, respectively, by shaping the transformer secondary winding signals to avoid the need of PWM signals from the primary controller. This enables PWM signals to be generated on the secondary side of the circuit without the need for voltage isolation between the primary and secondary sides required in the implementation illustrated in Fig. 3. Additionally, the higher performance of active drive circuits is achieved over the implementations described with respect to Figs. 1, 2 and 4.

It will be appreciated by those skilled in the art having the benefit of this disclosure that this DC/DC power converter having active self driving synchronous rectification provides an efficient, low density configuration. It should be understood that the drawings and detailed description herein are to be regarded in an illustrative rather than a restrictive manner, and are not intended to be limiting to the particular forms and examples disclosed. On the contrary, included are any further modifications, changes, rearrangements, substitutions, alternatives, design choices, and embodiments apparent to those of ordinary skill in the art, without departing from the spirit and scope hereof, as defined by the following claims. Thus, it is intended that the following claims be interpreted to embrace all such further modifications, changes, rearrangements, substitutions, alternatives, design choices, and embodiments.

## Claims

1. A DC/DC voltage converter, comprising:
a transformer including a primary side and a secondary side;
primary side circuitry connected to the primary side including a first pair of switching transistors controlled responsive to first control signals from the primary side of the transformer and receiving an input voltage;
secondary side circuitry connected to the secondary side including a second pair of switching transistors controlled responsive to second control signals from the secondary side of the transformer and providing an output voltage;
driver circuitry for generating the second control signals responsive to drain and source voltages at each of the second pair of switching transistors and a first and second PWM control signals; and
signal shaping circuitry for providing the first and second PWM control signals responsive to a drain voltage of each of the second pair of switching transistors.

2. The DC/DC voltage converter of Claim 1, wherein the signal shaping circuitry includes:
a first signal shaping circuit for generating the first PWM signal responsive to a drain voltage of a second transistor of the second pair of switching transistors; and
a second signal shaping circuit for generating the second PWM signal responsive to a drain voltage of a first transistor of the second pair of switching transistors.

3. The DC/DC voltage converter of Claim 1 or 2, wherein the transformer, the primary side circuitry and the secondary side circuitry are in a half bridge configuration.

4. The DC/DC voltage converter of Claim 1 or 2, wherein the transformer, the primary side circuitry and the secondary side circuitry are in an active clamp forward configuration.

5. The DC/DC voltage converter of Claim 1 or 2, wherein the driver circuitry provides a high current drive.

6. The DC/DC voltage converter of Claim 1 or 2, wherein the driver circuitry provides dead time control between the second pair of switching transistors.

7. The DC/DC voltage converter of Claim 1 or 2, wherein the driver circuitry provides diode emulation with the second pair of transistors.

8. The DC/DC voltage converter of Claim 2, wherein the first signal shaping circuit further generates the first PWM signal further responsive to a source voltage of the second transistor and further wherein the second signal shaping circuit further generates the second PWM signal further responsive to a source voltage of the first transistor.

9. A method for operating a DC/DC voltage converter, comprising the steps of:
receiving an input voltage;
switching a first pair of transistors on a primary side of a transformer receiving the input voltage;
coupling a voltage on the primary side of a transformer to a secondary side of the transformer;
switching a second pair of transistors on the secondary side of the transformer responsive to drive signals;
generating the drive signals on the secondary side of the transformer responsive to drain voltages and source voltages of the second pair of transistors and a first PWM signal and a second PWM signal; and
generating the first and second PWM control signals responsive to a drain voltage of each of the second pair of switching transistors.

10. The method of Claim 9, further including the step of providing dead time control between the second pair of switching transistors.

11. The method of Claim 9, further including the step of providing diode emulation with the second pair of transistors.

12. The method of Claim 9, wherein the step of generating the first PWM and the second PWM control signal further comprises the steps of:
generating the first PWM signal responsive to a drain voltage of a second transistor of the second pair of switching transistors; and
generating the second PWM signal responsive to a drain voltage of a first transistor of the second pair of switching transistors.

13. The method of Claim 12, wherein the step of generating the first PWM signal further comprises the step of generating the first PWM signal further responsive to a source voltage of the second transistor and further wherein the step of generating the second PWM signal further comprises the step of generating the second PWM signal further responsive to a source voltage of the first transistor.

14. The method of Claim 9, wherein the step of generating the first PWM and the second PWM control signal further comprises the step of signal shaping the drain voltages of the second pair of transistors to generate the first PWM and the second PWM control signal.
